(19) Europäisches Patentamt
European Patent Office
Office européen des brevets

(11) EP 0 850 197 B1

(12) EUROPÄISCHE PATENTSCHRIFT

(45) Veröffentlichungstag und Bekanntmachung des Hinweises auf die Patenterteilung:
**09.06.1999 Patentblatt 1999/23**

(21) Anmeldenummer: **96932504.2**

(22) Anmeldetag: **12.09.1996**

(51) Int. Cl.$^6$: **C01B 33/158**

(86) Internationale Anmeldenummer:
**PCT/EP96/03999**

(87) Internationale Veröffentlichungsnummer:
**WO 97/10178 (20.03.1997 Gazette 1997/13)**

(54) **ORGANOFUNKTIONALISIERTE AEROGELE**
ORGANOFUNCTIONALISED AEROGELS
AEROGELS ORGANOFONCTIONNALISES

(84) Benannte Vertragsstaaten:
**AT BE CH DE DK ES FI FR GB GR IE IT LI LU MC NL PT SE**

(30) Priorität: **13.09.1995 DE 19533851**

(43) Veröffentlichungstag der Anmeldung:
**01.07.1998 Patentblatt 1998/27**

(73) Patentinhaber: **CABOT CORPORATION**
**Boston, MA 02109 (US)**

(72) Erfinder:
- **HÜSING, Nicola**
  **A-1090 Wien (AT)**
- **SCHUBERT, Ulrich**
  **A-2752 Wöllersdorf (AT)**

(74) Vertreter:
**Luderschmidt, Schüler & Partner GbR**
**Patentanwälte,**
**John-F.-Kennedy-Strasse 4**
**65189 Wiesbaden (DE)**

(56) Entgegenhaltungen:
**EP-A- 0 653 377**

- **DATABASE WPI Section Ch, Week 9407 Derwent Publications Ltd., London, GB; Class E36, AN 94-051133 XP002021997 & JP,A,05 279 011 (MATSUSHITA ELECTRIC WORKS LTD) , 26.Oktober 1993**
- **DATABASE WPI Section Ch, Week 9542 Derwent Publications Ltd., London, GB; Class A26, AN 95-322904 XP002021998 & JP,A,07 185 306 (NICHIAS CORP) , 25.Juli 1995**

EP 0 850 197 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft organofunktionalisierte Aerogele, ein Verfahren zu ihrer Herstellung sowie ihre Verwendung.

Aerogele sind hochporöse Materialien mit niedriger Dichte, die durch Bildung eines Gels mit anschließender Entfernung der Flüssigkeit unter Erhaltung der Gelstruktur hergestellt werden.

Nach einer enger gefaßten Definition (siehe z.B. Gesser und Goswami, Chem. Rev. 1989, 89, 767) versteht man unter Aerogelen Materialien, bei denen die Flüssigkeit aus dem Gel unter überkritischen Bedingungen entfernt wird, während man bei Geltrocknung unter unterkritischen Bedingungen von Xerogelen und im Falle der Entfernung der Flüssigkeit aus dem gefrorenen Zustand durch Sublimation von Kryogelen spricht.

Aerogele im Sinne der vorliegenden Erfindung umfassen all diese Materialien und können außer Luft auch beliebige andere Gase enthalten.

Aufgrund ihrer hohen Porosität haben Aerogele interessante physikalische Eigenschaften, aufgrund derer sie sich unter anderem als Wärmeisolationsmaterialien, akustische Materialien, lumineszierende Sonnenkollektoren, Gasfilter, Katalysatoren oder Trägermaterialien eignen.

Für viele dieser Anwendungen ist es wünschenswert, die chemischen Eigenschaften der Aerogele modifizieren zu können, beispielsweise durch den Einbau funktioneller Gruppen.

In der DE-A 40 02 287 sind funktionalisierte anorganische Xerogele beschrieben. Unter den dort angegebenen Herstellungsbedingungen werden jedoch keine Produkte mit Gelstrukturen erhalten, es handelt sich also nicht um Aerogele im Sinne der vorliegenden Erfindung.

Aerogele, die mit Aminoalkoholen verethert wurden, werden in der US-A 5,270,027 beschrieben. Solche Etherbrücken sind jedoch nicht besonders langzeitstabil, so daß eine allmähliche Abspaltung der organischen Gruppen stattfindet.

In der EP-A 0 629 442 werden chelatisierte Übergangsmetalle enthaltende Aerogele als Katalysatoren offenbart und Cao und Hunt (Mat. Res. Soc. Symp. Proc. 1994, Vol. 346, 631) beschreiben aminofunktionalisierte Aerogele.

Schubert et al. (Mat. Res. Soc. Symp. Proc. 1994, Vol. 346, 151) haben Aerogele mit Methacryloxypropyl- und Glycidoxypropylgruppen synthetisiert.

Für die obengenannten Anwendungsgebiete von Aerogelen besteht aber ein ständiger Bedarf an weiteren organofunktionalisierten Aerogelen.

Es wurde nun überraschend gefunden, daß Aerogele mit (Pseudo)Halogen-, Thio- und Phosphanofunktionen auf der inneren Oberfläche hergestellt werden können, ohne daß diese funktionellen Gruppen oder die Gelstruktur im Verlauf des Herstellungsprozesses zerstört werden.

Gegenstand der Erfindung ist daher ein Aerogel, enthaltend funktionelle Reste der Formel (I),

$$-Y-Z \qquad (I)$$

wobei

- Y eine geradkettige oder verzweigte Alkylengruppe mit 1 bis 22, vorzugsweise 1 bis 12, besonders bevorzugt 2 bis 3, Kohlenstoffatomen
- Z Halogen, vorzugsweise Cl, Br, I, besonders bevorzugt Cl, Pseudohalogen, vorzugsweise CN oder SCN, $SR^1$, $PR^2R^3$, Farbstoff-Rest oder Metallkomplex-Rest;
- $R^1$ H, eine geradkettige oder verzweigte Alkylgruppe mit 1 bis 22, vorzugsweise 1 bis 12, Kohlenstoffatomen, oder eine Arylgruppe mit 4 bis 10 Kohlenstoffatomen, vorzugsweise Phenyl (Ph) oder Naphthyl, und
- $R^2$,$R^3$ gleich oder verschieden, vorzugsweise gleich, eine geradkettige oder verzweigte Alkylgruppe mit 1 bis 22, vorzugsweise 1 bis 12, Kohlenstoffatomen oder eine Arylgruppe mit 4 bis 10 Kohlenstoffatomen, vorzugsweise Phenyl (Ph) oder Naphthyl,

bedeuten.

Die verwendeten Aerogele sind im allgemeinen solche auf der Basis von Metalloxiden, die für die Sol-Gel-Technik geeignet sind (siehe z.B. C.J. Brinker, G.W. Scherer, Sol-Gel-Science, 1990, Kap. 2 und 3), wie beispielsweise Si-, Al-, Ti-, Sn- oder Zr-Verbindungen oder solche auf der Basis organischer Stoffe, die für die Sol-Gel-Technik geeignet sind, wie Melaminformaldehydkondensate (US-A-5,086,085) oder Resorcinformaldehydkondensate (US-A-4,873,218). Sie können aber auch auf Mischungen der obengenannten Materialien basieren. Bevorzugt verwendet werden Aerogele, enthaltend Si- oder Al-Verbindungen, besonders bevorzugt Si-Verbindungen, insbesondere bevorzugt sind $SiO_2$-Aerogele.

Die erfindungsgemäßen Aerogele enthalten die funktionellen Reste -Y-Z vorzugsweise direkt an die Metall-, Halbmetall- bzw. Kohlenstoffkomponente des Aerogels, d.h. beispielsweise an Si, Al, Ti, Sn, Zr oder C gebunden. Daraus folgt,

daß der funktionelle organische Rest vorzugsweise nicht über ein Sauerstoffatom an das Aerogel gebunden ist.
Die erfindungsgemäßen Aerogele können beispielsweise aus Mischungen von reinen Metallalkoholaten, insbesondere von Si, Al, Zr, Ti und Sn, und solchen, in denen mindestens ein, vorzugsweise ein Alkoholatrest durch die Gruppe -Y-Z ersetzt ist, hergestellt werden. Die den Rest -Y-Z enthaltende Komponente kann dabei in einem Anteil von bis zu 60 Mol-% zugesetzt werden. Die Bezeichnung Metallalkoholat schließt hier die entsprechenden Halbmetall- oder auch Kohlenstoffverbindungen mit ein. Bevorzugt sind Mischungen von Tetraalkoxysilanen ($Si(OR)_4$, wobei R $C_1$- $C_{12}$ Alkyl, vorzugsweise Methyl oder Ethyl, bedeutet) und Trialkoxysilanen ($(RO)_3Si$-Y-Z , wobei R $C_1$ - $C_{12}$ Alkyl bedeutet und Y,Z die oben angegebenen Bedeutungen haben).

Sowohl die eingesetzten Metallalkoholate als auch die organomodifizierten Metallalkoholate sind kommerziell erhältlich oder können nach an sich bekannten, dem Fachmann geläufigen Methoden hergestellt werden.

Solche Methoden werden beispielsweise in dem Artikel "Hybrid Inorganic-Organic Materials by Sol-Gel Processing of Organofunctional Metal Alkoxides" (U. Schubert et al., Chem. Mat., 1995, 7, 2010) beschrieben. Herstellungsmethoden für die bevorzugten Organoalkoxysilane, wie beispielsweise die Hydrosilylierung ungesättigter Verbindungen mit anschließender Alkoholyse:

$$Cl_3SiH + CH_2{=}CH{-}R \rightarrow Cl_3Si{-}CH_2{-}CH_2{-}R \xrightarrow{R'OH/HCl} (R'O)_3Si{-}CH_2{-}CH_2{-}R$$

sind u.a. beschrieben in W. Noll, Chemie und Technologie der Silicone, Verlag Chemie, Weinheim, 1968 und U. Deschler, P. Kleinschmit, P. Panster, Angew. Chem. 1986, 98, 237 (Int. Ed. Engl. 1986, 25, 236). Zahlreiche Einzelbeispiele enthält E.P. Plueddermann, Silane Coupling Agents, 2. Aufl., S. 31-54, Plenum Press., New York 1991.

Kommerziell erhältlich sind beispielsweise Alkoxysilane $(R'O)_3$-SiR in denen R Bromooctyl, Bromophenyl, 3-Bromopropyl, 3-Butenyl, Chloroethyl, Chlorophenyl, 3-Chloropropyl, 2-(4-Chorosulfonylphenyl)ethyl, 2-Cyanoethyl, 3-Cyanopropyl, 2-(3-Cyclohexenyl)ethyl, Diethylphosphanoethyl, (Heptafluoroisopropoxy), Iodopropyl, 3-Isocyanatopropyl, 3-Mercaptopropyl oder 3-Thiocyanatopropyl bedeutet.

Als Farbstoff kann beispielsweise das Derivat eines NLO-Farbstoffs eingesetzt werden, das sich von der Stammverbindung Dispersionsrot (englisch: disperse red) dadurch ableitet, daß die $N(Et)CH_2CH_2OH$-Gruppe durch die $N(Et)CH_2CH_2OC(O)NH(CH_2)_3Si(OMe)_3$-Gruppe ersetzt wurde. Die Darstellung dieser Verbindung ist in der Dissertation von Heinrich Stein, Universität Würzburg 1994, beschrieben, die Darstellung ähnlicher Derivate z.B. in: Chaput, F.; Riehl, D.; Levy, Y.; Boilot, J. P., Chem. Mater. 1993, 5, 589; Chaput, F.; Boilot, J. P.; Riehl, D.; Levy, Y., J. Sol-Gel Sci. Technol. 1994, 2, 779; Lebeau, B.; Guermeur, C.; Sanchez, C., Mat. Res. Soc. Symp. Proc. 1994, 346, 315; Ueda, M.; Kim, H.-B.; Ikeda, T.; Ichimura, K., J. Non-Cryst. Solids 1993, 163, 125., Yang, Z.; Xu, C.; Wu, B.; Dalton, L. R.; Kalluri, S.; Steier, W. H.; Shi, Y.; Bechtel, J.H., Chem. Mater. 1994, 6, 1899.

Statt dieser oder anderer NLO-Farbstoffe können auch Chromophore (funktionelle Gruppe Z) für andere Anwendungen, z.B. Fluoreszenz-Farbstoffe, pH-Indikatoren, photochrome Farbstoffe, Laserfarbstoffe oder Farbstoffe zur Einfärbung der Aerogele verwendet werden. Voraussetzung ist jeweils, daß das eigentliche Farbstoff-Molekül (= die chromophore Einheit) mit einer $(CH_2)_nSi(OR)_3$-Einheit derivatisiert wird, um im Sol-Gel-Prozeß eine kovalente Anbindung des Chromophors an das Aerogelgerüst zu gewährleisten. Vorteil dieses Verfahrens gegenüber einer bloßen Einlagerung der Farbstoffmoleküle in die Aerogelmatrix ist, daß ein Ausbluten weitgehend oder völlig verhindert werden kann. Weitere Beispiele für einsetzbare Farbstoff-Derivate werden in dem Artikel "Hybrid Inorganic-Organic Materials by Sol-Gel-Processing of Organofunctional Metal Alkoxides" (K. Schubert et al., Chem. Mater., 1995, 7, 2010) beschrieben.

Überraschend ist, daß Chromophore in Aerogele über kovalente Bindungen eingebaut werden können, ohne daß dabei die Aerogel-Struktur signifikant gestört wird und ohne daß unter den Herstellungsbedingungen das Farbstoffmolekül zerstört wird.

Als Metallkomplex kann beispielsweise das Derivat eines katalytisch aktiven Metallkomplexes eingesetzt werden, das sich von der Stammverbindung trans-$Rh(CO)(Cl)(PPh_3)_2$ dadurch ableitet, daß die $PPh_3$-Liganden durch $PPh_2CH_2CH_2Si(OMe)_3$ ersetzt wurden. Die Darstellung dieser Verbindung ist in B. E. Mann, C. Masters, B. L. Shaw, J. Chem. Soc. Dalton Trans. 1972, 704 beschrieben.

Statt dieses Komplexes können auch andere, auf analoge Weise derivatisierte Metallkomplexe verwendet werden. Weitere Beispiele für einsetzbare Metallkomplexe werden in zwei Übersichtsartikeln (U. Schubert, N. Hüsing, A. Lorenz, Chem. Mater. 1995, 7, 2010 und U. Schubert, New J. Chem. 1994, 18, 1049) beschrieben.

Überraschend ist, daß Metallkomplexe in Aerogele über kovalente Bindungen eingebaut werden können, ohne daß dabei die Aerogel-Struktur signifikant gestört wird und ohne daß unter den Herstellungsbedingungen der Metallkomplex zerstört wird.

Zur Herstellung der erfindungsgemäßen Aerogele wird eine Lösung der Ausgangsverbindungen in einem organischen Lösungsmittel, vorzugsweise einem Alkohol, wie Methanol, Ethanol, oder Aceton, einem an sich bekannten Sol-Gel-Prozeß unterworfen, wie er z.B. in J. Non-Cryst. Solids 1992, 145, 85; J. Sol-Gel-Scie. Technol. 1994, 2, 103 oder Mat. Res. Soc. Symp. Proc. 1994, 346, 151 beschrieben ist.

Zuerst werden Lyogele durch Hydrolyse und Kondensation, vorzugsweise unter basischen Bedingungen, beispielsweise durch Zugabe der zur Hydrolyse aller Metallalkoholat-Gruppen nötigen Menge einer 0,01N wäßrigen Lösung von $NH_4OH$, hergestellt. Die Dichte der späteren Aerogele wird dabei durch Zugabe des Lösungsmittels vorzugsweise auf einen Wert von 50 bis 200 kg/m$^3$ eingestellt. Das Sol kann vorteilhafterweise zur Durchmischung kurze Zeit, vorzugsweise 5 Minuten, nachgerührt werden.
Nach dem Gelieren wird das Gel vorzugsweise über einen längeren Zeitraum, vorzugsweise bei erhöhter Temperatur, besonders bevorzugt unterhalb des Siedepunkts des Lösungsmittels, gealtert.
Anschließend wird das Gel nach bekannten Methoden überkritisch oder unterkritisch getrocknet.
Ein Verfahren zur unterkritischen Trocknung wird beispielsweise in der DE-A 43 16 540 beschrieben.
Bevorzugt ist jedoch die Trocknung unter überkritischen Bedingungen. Die kritischen Konstanten für das jeweilige Lösungsmittel können den bekannten Tabellenwerken, z.B. dem Handbook of Chemistry and Physics, 40. Ausgabe (1958), Seiten 2302 bis 2304, entnommen werden. Die kritische Temperatur und der kritische Druck sind beispielsweise für Kohlendioxid 31,1°C und 73,0 atm., für Methanol 240°C und 78,7 atm., für Ethanol 243,1°C und 63,1 atm., für n-Propanol 263,7°C und 49,95 atm. und für iso-Propanol 235°C und 53 atm.. Die Trocknung des Gels unter überkritischen Bedingungen kann beispielsweise in Anlehnung an die in der EP-A-0 067 741 (= US-A 4,432,956) und bei U. Schubert et al., I. Non. Cryst. Solids, 1995, 186, 37-43 beschriebenen Verfahren durchgeführt werden.

Besonders bevorzugt ist die überkritische Trocknung in $CO_2$, da diese unter relativ schonenden Bedingungen abläuft.

Alternativ zu dem beschriebenen Verfahren läßt sich auch aus Metallalkoholaten, wie oben beschrieben, ein Gel herstellen, dem dann vor der Trocknung, beispielsweise vor oder während des Alterns, die organomodifizierte Komponente zugesetzt wird. Um die Reaktion der organomodifizierten Komponente mit der inneren Oberfläche zu beschleunigen, kann gegebenenfalls erwärmt werden. Auch ein Katalysator kann verwendet werden, z.B. eine Säure oder eine Base.
Die Trocknung kann dann, wie oben beschrieben, über- oder unterkritisch durchgeführt werden.

Die erfindungsgemäßen Aerogele fallen monolithisch an. Sie enthalten die funktionellen Reste zum überwiegenden Teil auf der inneren Oberfläche. Sie sind häufig opak oder transparent. Überraschenderweise zeichnen sich mit Halogenen, wie Cl, und Pseudohalogenen, wie CN, funktionalisierte Aerogele durch eine besonders hohe Transparenz aus.

Die erfindungsgemäßen Aerogele eignen sich für Anwendungen beispielsweise auf dem Gebiet der Katalysatoren, z.B. zum Anknüpfen von Metallionen oder Metallkomplexen, oder als Sensoren.

Die Erfindung wird im folgenden durch Ausführungsbeispiele näher erläutert, ohne dadurch beschränkt zu werden.

Beispiele

Die innere Oberfläche der Aerogele wurde nach der BET-Methode in Anlehnung an DIN 66 131 bestimmt.

Beispiel 1

20,55 g (135 mmol) Tetramethoxysilan und 2,97 g (15 mmol) käufliches Chlorpropyltrimethoxysilan werden mit 13,27 g (414 mmol) Methanol versetzt. Zur Hydrolyse und Kondensation werden zu dieser Lösung 10,53 g (585 mmol) einer 0,01 n $NH_4OH$-Lösung gegeben und die Mischung 5 Minuten gerührt. Mach 30 Minuten liegt die Mischung als Lyogel vor. Mach einer 7tägigen Alterung im geschlossenen Gefäß bei 30°C wird das Lyogel in einen Autoklaven überführt und mittels $CO_2$ überkritisch getrocknet (unter Kühlung 4 tägiger Spülvorgang: Fluß: 200 ml/min, Aufheizen auf 40°C mit 0,25 °C/min, Druck bis 100 bar, Ablassen des Fluids über einen Tag).
Am Ende der überkritischen Trocknung wird ein transparentes Aerogel mit einer Dichte von 251 kg/m$^3$ und einer inneren Oberfläche von 875 m$^2$/g erhalten.

Beispiel 2

20,55 g (135 mmol) Tetramethoxysilan und 2,95 g (15 mmol) Mercaptopropyltrimethoxysilan (erhältlich gemäß der US-A 4,082,790) werden in 13,21 g (412 mmol) Methanol vorgelegt und mit 10,53 g (585 mmol) einer 0,01 n $NH_4OH$-Lösung versetzt. Nach 25 Minuten wird ein Lyogel erhalten, das nach einer Alterung von 7 Tagen bei 30°C in einem geschlossenen Gefäß in einen Autoklaven überführt und mittels $CO_2$ wie in Beispiel 1 überkritisch getrocknet wird.
Dabei wird ein Aerogel mit einer Dichte von 265 kg/m$^3$ und einer inneren Oberfläche von 654 m$^2$/g erhalten.

Beispiel 3

16,89 g (111 mmol) Tetramethoxysilan und 4,06 g (12 mmol) Diphenylphosphinoethyltrimethoxysilan (erhältlich nach Miebergall, Makromol. Chem. 1962, 52, 218) werden in 16,53 g (516 mmol) Methanol vorgelegt und mit 8,64 g (480 mmol) einer 0,01 n $NH_4OH$-Lösung versetzt. Nach 15 Minuten wird ein Lyogel erhalten, das nach einer 7tägigen Alterung analog Beispiel 1 überkritisch getrocknet wird. Dabei wird ein weißes Aerogel mit einer Dichte von 238 kg/$m^3$ und einer inneren Oberfläche von 624 $m^2$/g erhalten.

Beispiel 4

12,18 g (80 mmol) Tetramethoxysilan und 0,24 g (0,42 mmol) des Farbstoffs

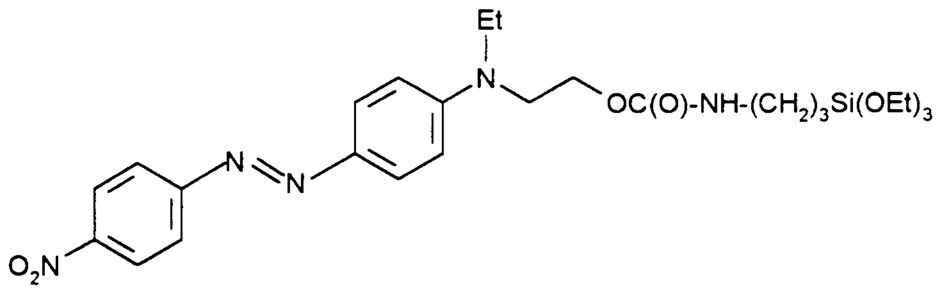

werden in 25,59 g (799 mmol) Methanol gelöst und mit 5,76 g (320 mmol) einer 0,01 n $NH_4OH$-Lösung versetzt. Nach 6 bis 7 Stunden wird ein Lyogel erhalten, das nach einer 7tägigen Alterung analog Beispiel 1 überkritisch getrocknet wird. Dabei wird ein tiefrotes Aerogel mit einer Dichte von 156 kg/$m^3$ erhalten.

Beispiel 5

25,11 g (165 mmol) Tetramethoxysilan und 0,36 g (0,41 mmol) des Metallkomplexes trans-$Rh(CO)(Cl)[PPh_2CH_2CH_2Si(OMe)_3]_2$ werden in 10,83 g (338 mmol) Methanol gelöst und mit 11,93 g (663 mmol) einer 0,01 n $NH_4OH$-Lösung versetzt. Mach 40 Minuten wird ein Lyogel erhalten, das nach einer 7tägigen Alterung analog Beispiel 1 überkritisch getrocknet wird. Dabei wird ein fahlgelbes Aerogel mit einer Dichte von 304 kg/$m^3$ erhalten.

## Patentansprüche

**1.** Aerogel, enthaltend funktionelle Reste der Formel (I),

$$-Y-Z \quad (I)$$

wobei die funktionellen Reste -Y-Z direkt an Siliciumatome gebunden sind;

Y eine geradkettige oder verzweigte Alkylengruppe mit 1 bis 22 Kohlenstoffatomen;
Z Halogen, Pseudohalogen, $SR^1$, $PR^2R^3$, Farbstoff-Rest oder Metallkomplex-Rest;
$R^1$ H, eine geradkettige oder verzweigte Alkylgruppe mit 1 bis 22 Kohlenstoffatomen oder eine Arylgruppe mit 4 bis 10 Kohlenstoffatomen und
$R^2$,$R^3$ gleich oder verschieden, eine geradkettige oder verzweigte Alkylgruppe mit 1 bis 22 Kohlenstoffatomen oder eine Arylgruppe mit 4 bis 10 Kohlenstoffatomen
bedeuten.

**2.** Aerogel gemäß Anspruch 1, dadurch gekennzeichnet, daß es sich um ein $SiO_2$-Aerogel handelt.

**3.** Aerogel gemäß mindestens einem der vorhergehenden Ansprüche, dadurch gekennzeichnet, daß die Symbole in der Formel (I) folgende Bedeutungen haben:

Y ist eine geradkettige oder verzweigte Alkylengruppe mit 1 bis 12 Kohlenstoffatomen;
Z ist Cl, Br, I, CN, SCN, $SR^1$ oder $PR^2R^3$;

$R^1$ ist H, eine geradkettige oder verzweigte Alkylgruppe mit 1 bis 12 Kohlenstoffatomen, Phenyl oder Naphthyl und

$R^2$,$R^3$ sind gleich oder verschieden eine geradkettige oder verzweigte Alkylgruppe mit 1 bis 12 Kohlenstoffatomen, Phenyl oder Naphthyl.

4. Aerogel gemäß Anspruch 3, dadurch gekennzeichnet, daß die Symbole in der Formel (I) folgende Bedeutungen haben:

Y ist eine geradkettige Alkylengruppe mit 2 oder 3 Kohlenstoffatomen und
Z ist Cl, SH oder $-PPh_2$.

5. Aerogel gemäß mindestens einem der vorhergehenden Ansprüche, dadurch gekennzeichnet, daß es den Rest -Y-Z in einem Anteil von bis zu 60 Mol-%, bezogen auf die Metallatome, enthält.

6. Verfahren zur Herstellung von organofuntionalisierten Aerogelen nach Anspruch 1, dadurch gekennzeichnet, daß man reine Metallalkoholate und Metallalkoholate, in denen mindestens ein Alkoholatrest durch die Gruppe -Y-Z ersetzt ist, durch Hydrolyse und Kondensation zu einem Lyogel umsetzt und anschließend trocknet.

7. Verfahren gemäß Anspruch 6, dadurch gekennzeichnet, daß man die den Rest -Y-Z enthaltende Komponente in einem Anteil von bis zu 60 mol-% zusetzt.

8. Verfahren gemäß Anspruch 6 oder 7, dadurch gekennzeichnet, daß man Tetraalkoxysilane der Formel $Si(OR^3)_4$ und Trialkoxysilane der Formel $(R^4O)_3Si$-Y-Z, wobei $R^3$ und $R^4$ $C_1$-$C_{12}$-Alkylreste sind und die übrigen Symbole die gleichen Bedeutungen wie in der Formel (I) in Anspruch 1 haben zu einem organomodifizierten $SiO_2$-Aerogel umsetzt.

9. Verfahren gemäß mindestens einem der Ansprüche 6 bis 8, dadurch gekennzeichnet, daß man vor der Trocknung eine Alterung des Gels durchführt.

10. Verfahren gemäß mindestens einem der Ansprüche 6 bis 9, dadurch gekennzeichnet, daß man die Trocknung überkritisch durchführt.

11. Verfahren gemäß Anspruch 10, dadurch gekennzeichnet, daß man als Fluid für die überkritische Trocknung $CO_2$ verwendet.

12. Verwendung von organofunktionalisierten Aerogelen nach einem oder mehreren der Ansprüche 1 bis 5 als Katalysatorvorstufen und/oder Sensoren.

## Claims

1. An aerogel containing functional radicals to formula (I)

$$-Y-Z \qquad (I)$$

in which the functional radicals -Y-Z are directly bonded to silicon atoms; Y is a straight-chain or branched alkylene group with 1 to 22 carbon atoms;

Z is halogen, pseudohalogen, $SR^1$, $PR^2R^3$, dye radical or metal complex radical;
$R^1$ H, a straight chain or branched alkyl group with 1 to 22 carbon atoms or an aryl group with 4 to 10 carbon atoms, and
$R^2$,$R^3$ are the same or different, a straight chain or branched alkyl group with 1 to 22 carbon atoms or an aryl group with 4 to 10 carbon atoms.

2. An aerogel according to claim 1, characterised in that it is an $SiO_2$ aerogel.

3. An aerogel according to at least one of the preceding claims, characterised in that the symbols in formula (I) have the following meanings:

Y is a straight chain or branched alkylene group with 1 to 12 carbon atoms;
Z is Cl, Br, I, CN, SCN, $SR^1$ or $PR^2R^3$,
$R^1$ is H, a straight chain or branched alkyl group with 1 to 12 carbon atoms, phenyl or naphthyl, and
$R^2$,$R^3$ are the same or different, a straight chain or branched alkyl group with 1 to 12 carbon atoms, phenyl or naphthyl.

**4.** An aerogel according to claim 3, characterised in that the symbols in formula (I) have the following meanings:

Y is a straight chain alkylene group with 2 or 3 carbon atoms, and
Z is Cl, SH or $-PPh_2$.

**5.** An aerogel according to at least one of the preceding claims, characterised in that in contains the radical -Y-Z in a fraction of up to 60 mole%in relation to the metal atoms.

**6.** A method of producing organofunctionalised aerogels according to claim 1, characterised in that pure metal alcoholates and metal alcoholates in which at least 1 alcoholate radical is replaced by the group -Y-Z are reacted by hydrolysis and condensation to produce a lyogel and then dries.

**7.** A method according to claim 6, characterised in that the components containing the radical -Y-Z are added in a fraction of up to 60 mole%.

**8.** A method according to claim 6 or 7, characterised in that tetra-alkoxysilanes to formula $Si(OR^3)_4$ and tri-alkoxysilanes to formula $(R^4O)_3Si$-Y-Z in which $R^3$ and $R^4$ are $C_1$-$C_{12}$ alkyl radicals and the other symbols have the same significance as in formula (I) in claim 1 are reacted to produce an organomodified $SiO_2$ aerogel.

**9.** A method according to at least one of claims 6 to 8, characterised in that the gel is aged prior to being dried.

**10.** A method according to at least one of claims 6 to 9, characterised in that the drying is conducted super-critically.

**11.** A method according to claim 10, characterised in that $CO_2$ is used as the fluid for the super-critical drying.

**12.** Use of organofunctionalised aerogels according to one or more of claims 1 to 5 as catalyst precursors and/or sensors.

## Revendications

**1.** Aérogel contenant des radicaux fonctionnels répondant à la formule (I)

$$-Y-Z \qquad (I)$$

dans laquelle les radicaux fonctionnels -Y-Z sont liés directement à des atomes de silicium;

Y représente un groupe alkylène à chaîne droite ou ramifiée contenant de 1 à 22 atomes de carbone;
Z représente un halogène, un pseudohalogène, un groupe $SR^1$, un groupe $PR^2R^3$, un radical de colorant ou un radical de complexe métallique;
$R^1$ représente un atome d'hydrogène, un groupe alkyle à chaîne droite ou ramifiée contenant de 1 à 22 atomes de carbone ou un groupe aryle contenant de 4 à 10 atomes de carbone; et
$R^2$, $R^3$ sont identiques ou différents et représentent un groupe alkyle à chaîne droite ou ramifiée contenant de 1 à 22 atomes de carbone ou un groupe aryle contenant de 4 à 10 atomes de carbone.

**2.** Aérogel selon la revendication 1, caractérisé en ce qu'il s'agit d'un aérogel contenant du $SiO_2$.

**3.** Aérogel selon au moins une des revendications précédentes, caractérisé en ce que les symboles dans la formule (I) possèdent les significations ci-après:

Y représente un groupe alkylène à chaîne droite ou ramifiée contenant de 1 à 12 atomes de carbone;
Z représente un atome de chlore, un atome de brome, un atome d'iode, un groupe CN, un groupe SCN, un groupe $SR^1$ ou un groupe $PR^2R^3$;

$R^1$ représente un atome d'hydrogène, un groupe alkyle à chaîne droite ou ramifiée contenant de 1 à 12 atomes de carbone, un groupe phényle ou un groupe naphtyle; et

$R^2$, $R^3$ sont identiques ou différents et représentent un groupe alkyle à chaîne droite ou ramifiée contenant de 1 à 12 atomes de carbone, un groupe phényle ou un groupe naphtyle.

**4.** Aérogel selon la revendication 3, caractérisé en ce que les symboles dans la formule (I) possèdent les significations ci-après:

Y représente un groupe alkylène à chaîne droite contenant 2 ou 3 atomes de carbone; et

Z représente un atome de chlore, un groupe SH ou un groupe $-PPh_2$.

**5.** Aérogel selon au moins une des revendications précédentes, caractérisé en ce qu'il contient le radical -Y-Z en une fraction allant jusqu'à 60 moles % rapportés aux atomes métalliques.

**6.** Procédé pour la fabrication d'aérogel contenant un radical fonctionnel de type organique selon la revendication 1, caractérisé en ce qu'on fait réagir des alcoolates métalliques purs et des alcoolates métalliques dans lesquels on a remplacé au moins un radical alcoolate par le groupe -Y-Z, par hydrolyse et par condensation pour obtenir un lyogel, puis on sèche.

**7.** Procédé selon la revendication 6, caractérisé en ce qu'on ajoute le composant contenant le radical -Y-Z en une fraction allant jusqu'à 60 moles %.

**8.** Procédé selon la revendication 6 ou 7, caractérisé en ce qu'on fait réagir des tétraalcoxysilanes répondant à la formule $Si(OR^3)_4$ et des trialcoxysilanes répondant à la formule $(R^4O)_3Si$-Y-Z où $R^3$ et $R^4$ représentent des radicaux alkyle en $C_1$-$C_{12}$, les autres symboles possédant les mêmes significations que celles de la formule (I) dans la revendication 1, pour obtenir un aérogel de $SiO_2$ modifié par un groupe organique.

**9.** Procédé selon au moins une des revendications 6 à 8, caractérisé en ce qu'on effectue, avant le séchage, un vieillissement du gel.

**10.** Procédé selon au moins une des revendications 6 à 9, caractérisé en ce qu'on effectue le séchage dans des conditions surcritiques.

**11.** Procédé selon la revendication 10, caractérisé en ce qu'on utilise, à titre de fluide pour le séchage surcritique, du $CO_2$.

**12.** Utilisation d'aérogels à fonctionnalité organique selon une ou plusieurs des revendications 1 à 5 à titre de précurseurs de catalyseurs et/ou de capteurs.